(19) Europäisches Patentamt / European Patent Office / Office européen des brevets

(11) **EP 4 531 371 A1**

(12) **EUROPEAN PATENT APPLICATION**

(43) Date of publication:
**02.04.2025 Bulletin 2025/14**

(21) Application number: **24201000.7**

(22) Date of filing: **18.09.2024**

(51) International Patent Classification (IPC):
**H04L 47/22** $^{(2022.01)}$      **H04L 47/50** $^{(2022.01)}$

(52) Cooperative Patent Classification (CPC):
**H04L 47/22; H04L 47/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 US 202318478298**

(71) Applicant: **Nokia Solutions and Networks Oy
02610 Espoo (FI)**

(72) Inventors:
• **FRANCINI, Andrea
  Pittsboro, NC 27312 (US)**
• **MILLER, Raymond
  Lakeville, ME 04487 (US)**

(74) Representative: **Nokia EPO representatives
Nokia Technologies Oy
Karakaari 7
02610 Espoo (FI)**

(54) **UNIVERSAL HIERARCHICAL SHAPER FOR NETWORK DETERMINISM IN GENERIC NETWORK TOPOLOGIES**

(57)    A scheduling controller configured to control a network having ingress nodes, interior nodes, and egress nodes, including: a network interface configured to communicate with the network; a memory; and a processor coupled to the memory and the network interface, wherein the processor is further configured to: define a traffic shaping hierarchy with a first level having a first traffic shaper associated with an ingress link between an ingress node and an interior node and a second level with a plurality of second traffic shapers associated with each path of a plurality of paths between the ingress link and the egress nodes; determine, each time a service assignment is due, which of the plurality of paths associated with the ingress link to service, based upon which of the plurality of paths has a lowest eligible finishing potential and wherein each link in the path has an eligible finishing potential; and determine, for the determined path, which of the packet queues associated with the network flows that are routed through the path to service, based upon which of the plurality of queues has a lowest eligible finishing potential.

EP 4 531 371 A1

**Description**

FIELD OF THE DISCLOSURE

Various exemplary embodiments disclosed herein relate to universal hierarchical shaper for network determinism in generic network topologies.

BACKGROUND

Deterministic networking is an area of the networking science that focuses on the provisioning of hard guarantees on throughput, latency, and reliability to traffic flows of applications found in a broad variety of use cases, including, among others, power-grid control, robotic motion control, network function disaggregation, high-performance computing, and all metaverse instances (industrial, enterprise, and consumer).

SUMMARY

A summary of various exemplary embodiments is presented below.

Further various embodiments relate to a scheduling controller configured to control a network having ingress nodes, interior nodes, and egress nodes, including: a network interface configured to communicate with the network; a memory; and a processor coupled to the memory and the network interface, wherein the processor is further configured to: define a traffic shaping hierarchy with a first level having a first traffic shaper associated with an ingress link between an ingress node and an interior node and a second level with a plurality of second traffic shapers associated with each path of a plurality of paths between the ingress link and the egress nodes; determine, each time a service assignment is due, which of the plurality of paths associated with the ingress link to service, based upon which of the plurality of paths has a lowest eligible finishing potential and wherein each link in the path has an eligible finishing potential; and determine, for the determined path, which of the packet queues associated with the network flows that are routed through the path to service, based upon which of the plurality of queues has a lowest eligible finishing potential.

Various embodiments are described, wherein servicing a packet queue is based upon a predetermined time schedule.

Various embodiments are described, wherein the predetermined time schedule is calculated offline.

Various embodiments are described, wherein the processor is further configured to: update a starting potential and finishing potential for the serviced path, the links of the serviced path, and the serviced queue.

Various embodiments are described, wherein the processor is further configured to: determine which of the plurality of paths associated with the ingress link to service based upon which of the plurality of paths have the lowest finishing potential when none of the paths have all of their links eligible.

Various embodiments are described, wherein two paths of the plurality of paths have different lengths.

Various embodiments are described, wherein defining a traffic shaping hierarchy includes identifying all unique paths by scanning a flow table.

Various embodiments are described, wherein the processor is further configured to: compute cumulative shaping rates of the first shaper and of the second shapers associated with the unique paths.

Various embodiments are described, wherein the processor is further configured to: compute the cumulative shaping rates of individual links in the network.

Various embodiments are described, wherein defining a traffic shaping hierarchy includes creating a virtual empty queue associated with the ingress link.

Further various embodiments relate to a method to control a network having ingress nodes, interior nodes, and egress nodes, including: defining a traffic shaping hierarchy with a first level having a first traffic shaper associated with an ingress link between an ingress node and an interior node and a second level with a plurality of second traffic shapers associated with each path of a plurality of paths between the ingress link and the egress nodes; determining, each time a service assignment is due, which of the plurality of paths associated with the ingress link to service, based upon which of the plurality of paths has a lowest eligible finishing potential and wherein each link in the path has an eligible finishing potential; and determining, for the determined path, which of the packet queues associated with the network flows that are routed through the path to service, based upon which of the plurality of queues has a lowest eligible finishing potential.

Various embodiments are described, wherein servicing a packet queue is based upon a predetermined time schedule.

Various embodiments are described, wherein the predetermined time schedule is calculated offline.

Various embodiments are described, further including: updating a starting potential and finishing potential for the serviced path, the links of the serviced path, and the serviced queue.

Various embodiments are described, further including: determining which of the plurality of paths associated with the ingress link to service based upon which of the plurality of paths have the lowest finishing potential when none of the paths have all of their links eligible.

Various embodiments are described, wherein two paths of the plurality of paths have different lengths.

Various embodiments are described, wherein defining a traffic shaping hierarchy includes identifying all unique paths by scanning a flow table.

Various embodiments are described, further including: computing cumulative shaping rates of the first shaper and the second shapers associated with the unique paths.

Various embodiments are described, further including: computing cumulative shaping rates of individual links in the network.

Various embodiments are described, wherein defining a traffic shaping hierarchy includes creating a virtual empty queue associated with the ingress node.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

BRIEF DESCRIPTION OF DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.

FIG. 1 shows an example of a periodic service sequence (PSS) that realizes a DaaS shaper.

FIG. 2 illustrates the method for construction of the shaping hierarchy for source host SH3.

FIG. 3 illustrates a realization of the UHS for the same topology shown in the example of FIG. 2.

FIG. 4A illustrates a first embodiment of a UHS system.

FIG. 4B illustrates a second embodiment of a UHS system.

FIG. 5 illustrates an exemplary hardware diagram for implementing a universal hierarchical shaper.

DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of traffic shaper methods and systems will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

Determinism as a Service (DaaS) is a lightweight framework for the enforcement of deterministic guarantees in large-scale networks. A DaaS implementation was described in U.S. Patent application No. 17/669,278, titled SOFTWARE-DEFINED GUARANTEED-LATENCY NETWORKING, Filed February 10, 2022 (the '278 application"), which is incorporated herein by reference for all purposes as if fully set forth herein. Further components of a DaaS were further disclosed in U.S. Patent application No. 17/862,723, titled GUARANTEED-LATENCY NETWORKING, filed July 12, 2022 (the '723 application"), and U.S. Patent application No. 17/135,845, titled PACKET SCHEDULING, December 28, 2020 (the '845 application"), which are incorporated herein by reference for all purposes as if fully set forth herein. DaaS is built on two components: a centralized controller for the admission and routing of deterministic traffic flows, and a per-flow traffic shaper that is deployed exclusively at the ingress links of the network. Simulation experiments and a proof-of-concept system that emulates a small data center fabric prove that DaaS can enforce much tighter bounds on end-to-end latency than any other solution that has been standardized or proposed in the literature so far. In a DaaS embodiment, a path computation engine (PCE) that is used to assign admitted deterministic flows to respective network paths may also be used to configure the instances of the per-flow traffic shaper that operate at the ingress links of the network. In another DaaS embodiment, the configuration of the traffic shaper instances is carried out by local scheduling controllers associated with the ingress links, based on information received from the PCE. For example, DaaS can keep the maximum latency well below 30 $\mu$s in a three-stage data center fabric with 10 Gb/s links all utilized at 96% of capacity, while the common approach of overprovisioning the link capacity exceeds 300 $\mu$s at 9.6% link utilization (i.e., DaaS enables a 10x reduction of the worst-case latency with a 10x increase in network utilization).

The uniqueness of the DaaS solution is in the construction of the per-flow shaper, which consists of a hierarchy of shaping nodes that is derived from the topology of the network and from the network paths over which the deterministic flows are routed. Previous patent applications (the '278 application and the '723 application) described examples for construction of the shaping hierarchy that were based on a regular network topology, such as the Clos topology that is commonly found in data center switching fabrics. The examples generally assumed the presence of one layer of shaping nodes for every switching stage in the network topology, with occasional opportunities for reduction of the number of shaping layers when certain topological conditions hold true. The disclosures did not provide a general method for construction of the shaping hierarchy for irregular network topologies where the number of links in the data path from source to destination changes with the endpoints and with the routes assigned to flows between the same endpoints.

The traffic shaping system described herein provides a universal method for construction of the shaping hierarchy that works for any network topology and for any feasible distribution of the deterministic flows over the available network paths (a feasible distribution of deterministic flows is one where the sum of the bandwidth allocations for the deterministic flows that traverse each network link never exceeds the capacity of the link).

The DaaS scheduler introduced in the '278 application and refined in the '723 application handles queues assigned individually to continuous guaranteed-latency (CGL) traffic flows. A CGL flow maintains a constant traffic generation profile throughout its activity time, which allows the allocation of a fixed bandwidth reservation at every link of its network path. The DaaS scheduler uses the bandwidth reservation to control the transmission of packets of the flow over the ingress link of the flow. As illustrated in the '278 application and the '723 application, the choice of the transmission time for each packet depends not only on the bandwidth reservation of the flow, but also on the network path over which the flow is routed. The benefit of adding routing information to the definition of the ingress-link packet transmission schedule is in the resulting minimization of the size of packet bursts that form in front of the interior links of the network, which translates into the minimal queuing delay that is necessary for the enforcement of tight upper bounds on end-to-end latency.

The DaaS scheduler of the '278 application and the '723 application is actually a shaper for the CGL flows because it uses the rate reservation of each flow not only as a minimum guarantee, but also as an upper bound on the service rate. An implication of the shaping behavior of the DaaS scheduler is that the scheduler may be idle, not transmitting packets, even at times when packets may be waiting for transmission in some of the CGL flow queues.

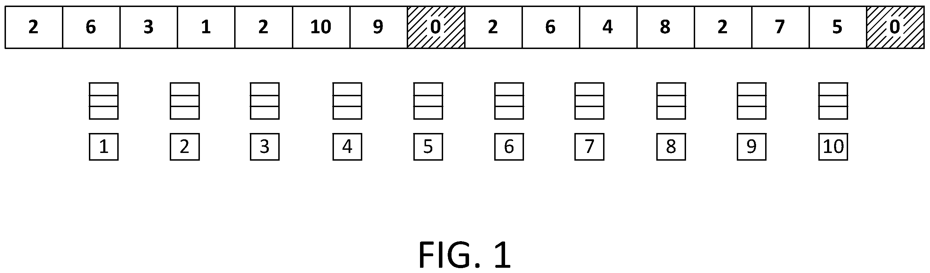

The DaaS shaper for the CGL flows is implemented using a periodic service sequence (PSS) that includes a finite set of timeslots of fixed and identical duration, where each timeslot can be either unassigned or assigned to a CGL flow queue. FIG. 1 shows an example of a PSS that realizes a DaaS shaper. Along the top is the order in which the queues are serviced, i.e, 2, 6, 3, . . ., 5, 0, where queue 0 identifies unassigned timeslots. Details for the operation of the PSS are disclosed in the '845 application.

A primary improvement of the DaaS shaper of the '278 application and the '723 application is in the method used for computing the PSS that maps timeslots onto CGL flow queues. The PSS calculation is performed offline, under the assumption that all queues are always busy (i.e., they are never empty) and transmit packets that have an identical size, whose transmission over the link controlled by the scheduler takes exactly the time duration of one timeslot. A conventional instantiation of the Worst-case-Fair Weighted-Fair Queuing (WF2Q) algorithm is used in the PSS computation. However, instead of having a single shaping node assign services to the flow queues, the DaaS shaper uses a hierarchy of shaping nodes that is derived from the network topology. A conventional instantiation of the Hierarchical Worst-case-Fair Weighted Fair Queuing (H-WF2Q) scheduler could be used in theory for generating the PSS out of the hierarchy, but a small modification disclosed in the '723 application, adding a notion of service eligibility for the links of the network, is strongly recommended for minimization of the end-to-end latency. The latest version of the shaper specification in the '723 application also provides for the shaping hierarchy to be constructed from top to bottom using a reverse traversal of the network topology, going from the last link to the second one in the network path (the first link is associated with the overall scheduling structure).

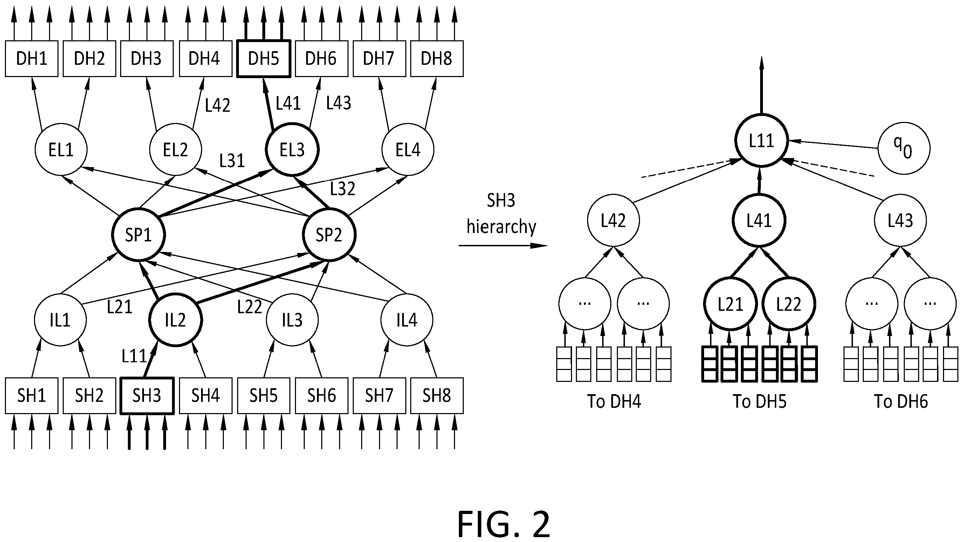

FIG. 2 illustrates the method for construction of the hierarchy for source host SH3 as disclosed in the '278 application and the '723 application, with emphasis on the CGL flows destined for destination host DH5. FIG. 2 refers to a leaf-spine data-center fabric with four ingress/egress leaves (shown as IL and EL), two spines (SP), and eight sources/destination hosts (SH/DH). The leaves and spines are network node instances, the endpoints are destination/source instances. The lefthand side of the picture shows a logical representation of the network, where all links are unidirectional and the endpoints and leaf switches are shown twice, distinctly as traffic sources/destination hosts (SH/DH) and as ingress/egress leaves (IL/EL). SP1 and SP2 are the spine switches, which are interior network nodes. The scheduling hierarchy on the righthand side of FIG. 2 refers to the DaaS shaper of link L11, instantiated in SH3. The portion of FIG. 2 that has bolded lines emphasizes the portion of the shaping hierarchy that handles the CGL flows that are destined for DH5. Every node in the shaping hierarchy is associated with a network link. The top node (on the right-hand side of FIG. 2) always represents the ingress link for which the hierarchy is being defined. The next layer (going from top to bottom) is associated with the egress links of the network, connecting the egress leaves of the data-center fabric to the destination hosts. In this layer there are at most as many shaping nodes as the number of destination hosts that can be reached from the source host. The next layer of shaping nodes should be for the links between the spines and the egress leaves of the data center fabric, and the next after that should be for the links between the ingress leaves and the spines of the fabric. However, it is easy to observe that for each link between spine and egress leaf there is only one link between ingress leaf and spine, so it is possible to have only one layer of shaping nodes for each pair of links between the ingress and the egress leaf (e.g., L21-L31 and L22-L32 in the topology of FIG. 2).

It should be noted that shaping nodes for each pair of links going in and out of the spine switches SP1 and SP2 must be included in the portion of the hierarchy associated with each egress link of the fabric. With $K$ egress links reachable from an ingress link, $K$ shaping nodes end up being included in the overall hierarchy for every pair of links connecting the ingress leaf of the ingress link to the egress leaf of the egress link. This replication of shaping nodes for the same portion of the data path may contribute to bursty packet arrivals to the interior links of the network because the duplicate nodes for a given link are scheduled independently within the respective portions of the hierarchy. This problem may be resolved with the augmentation of the H-WF2Q algorithm disclosed in the '723 application: in order for a queue to be selected for service (and be assigned to the current timeslot), the queue must be selected for service by the H-WF2Q algorithm and every physical link in its data path must be eligible for service. The eligibility of a physical link is determined by first providing the link with a service rate that is equal to the sum of the guaranteed rates of the CGL flows that traverse it, and then updating the starting and finishing timestamps of the link every time a flow that traverses the link is selected for service by the augmented H-WF2Q algorithm (the rules for updating the starting and finishing potentials for the links are the usual ones of the WF2Q algorithm). A physical link (and every flow that traverses it) is eligible for service at time t when its starting potential $S(t)$ is not greater than $t$: $S(t) \leq t$. If the H-WF2Q algorithm selects a queue for which at least one of the physical links in the network path is currently not eligible for service, the H-WF2Q algorithm looks for a different queue that does not violate the eligibility condition on any of its physical links.

The problem addressed by the traffic shaper system of the present disclosure is the complexity of constructing the hierarchy of scheduling nodes for the DaaS shaper for a network with generic topology, where the length of the network path can vary extensively across groups of deterministic flows. This traffic shaper is called the Universal Hierarchical Shaper (UHS) and provides a general method for construction of the shaping hierarchy that can be used for any network topology, any length of the network path, and any distribution of traffic flows.

The UHS simplifies the construction of the hierarchy for the DaaS shaper by eliminating the direct correspondence between the links of the network topology and the nodes of the shaping hierarchy. It defines instead a shaping hierarchy that includes only two shaping layers. On the top layer, a shaping node associated with the ingress link of the network serves a lower layer of shaping nodes associated with all the different network paths used by the flows that traverse the ingress link. On the bottom layer, each shaping node, corresponding to a unique network path, serves the queues of the flows that are routed through the same path.

As in the case of the hierarchy construction defined in the '278 application and the '723 application, for which an example is shown in FIG. 2, a virtual idle queue $q_0$, provisioned with a service rate $r_0$ that is equal to the difference between the capacity C of the ingress link and the sum of the rate reservations $r_i$ of all flow queues $i$ served by the shaper (

$$r_0 = C - \sum_{i=1}^{M} r_i$$

), is served directly by the shaping node of the top layer, so that the empty slots in the resulting PSS are distributed in time as evenly as possible.

The execution of the H-WF2Q algorithm of the UHS also includes the augmentation that requires satisfaction of the eligibility condition for all the physical links of the network path that is selected for service.

As a result of the UHS, a two-layer shaping hierarchy can be used for any network topology. The shaping nodes served by the top layer can be associated with network paths of different lengths. Despite the simplification over the previous version of the hierarchy construction, which roughly required one shaping layer for every hop in the network path, the hierarchy construction and augmented H-WF2Q scheduling algorithm of the UHS do not induce degradations in the latency experienced by CGL traffic flows. This is because the ultimate means for control of the end-to-end queuing latency is the application of the eligibility condition to all the physical links of a candidate network path.

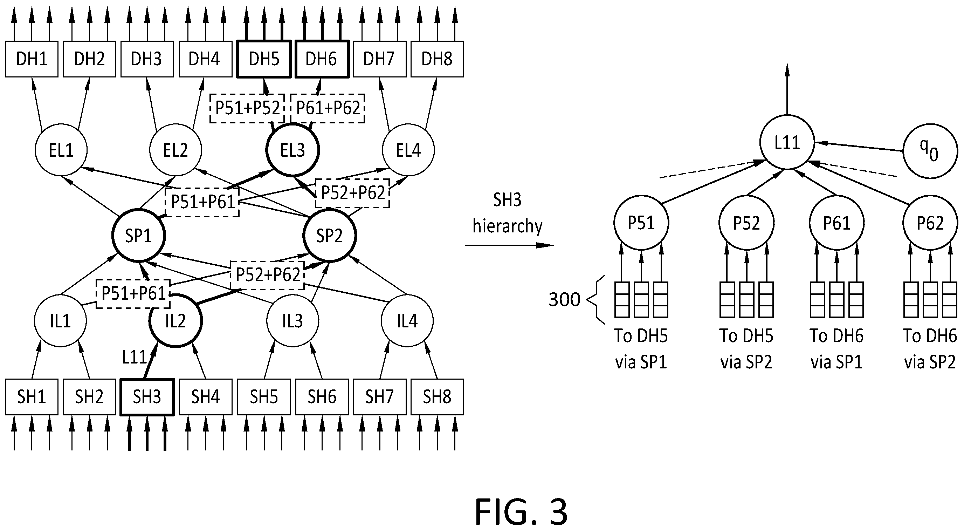

FIG. 3 illustrates a realization of the UHS for the same topology shown in the example of FIG. 2. In FIG. 3 the emphasis is on CGL flows going from SH3 to DH5 and DH6, but the full hierarchy also includes all other flows that originate at SH3 and are destined for all other destination hosts. The top shaping node and the arrangement of the virtual empty queue $q_0$ are the same as in FIG. 2. The difference of the UHS invention becomes clear with the next layer of shaping nodes, which are associated with network paths rather than physical links. Path P51 connects source host SH3 with destination host DH5 through spine SP1. Path P52 connects the same end hosts through spine SP2. The same distinction applies to paths P61 and P62 for connectivity between SH3 and DH6. Different paths may overlap on one physical link or more. The overlap is reflected by the virtual service rate of the physical links in the augmented realization of the H-WF2Q algorithm: the service rate of each physical link is the sum of the service rates of the flows that traverse it, which is also the sum of the service rates of the network paths that overlap on the link. The shaping nodes of this next layer associated with network paths receive packets from a plurality of flow queues 300 associated with the paths.

The realization of the UHS relies on the following two features:

- A new method for construction and configuration of the shaping hierarchy, which uses the network paths of the deterministic flows that are currently provisioned.
- A new method for operation of the H-WF2Q algorithm, which augments the canonical version of the algorithm with the verification of the eligibility condition for all the physical links of the candidate network paths.

The construction and configuration of the shaping hierarchy will now be described and may be carried out by a central scheduling controller associated with a PCE, or by instances of a local scheduling controller associated with respective ingress links The construction of the UHS shaping hierarchy starts from the CGL flow table of the ingress link of the UHS instance. The CGL flow table of the ingress link is the list of CGL flows currently provisioned in the network that originate from the ingress link of the UHS instance. Each CGL flow in the table is associated with an identifier, a shaping rate, and a network path.

The flow identifier is a unique number within the set of flows that are local to the ingress link. The shaping rate of the flow is the rate reserved to the queue 300 of the flow in the UHS instance. The value of the shaping rate can be derived from the traffic generation profile of the flow and may also reflect the end-to-end latency requirement of the flow (the latency requirement can be translated into a shaping rate using, for example, the latency bound disclosed in the '723 application or any other latency bound that is proven suitable for the DaaS network where the UHS instance is deployed - generally, a higher shaping rate yields a lower bound on the queuing latency of the shaper, which then translates into a lower upper bound on the end-to-end latency of the flow).

The network path is a sequence of identifiers for the links that compose the network path of the flow, starting from the link that follows the ingress link in the path (all flows served by the same UHS instance have in common the ingress link, which is associated with the top node in the shaping hierarchy and therefore does not need to be checked for eligibility when selecting the shaping node in the second layer). The link identifiers are generally unique within the entire network. However, for the sake of construction of the shaping hierarchy, they can be unique just within the set of links that are used by the flows that are served by the UHS instance.

The following two rows of numbers show an example of two flows listed consecutively in the CGL flow table used for construction of the UHS hierarchy:

| | | | | | |
|---|---|---|---|---|---|
| 241 | 0.00165 | 1 | 2 | 3 | |
| 242 | 0.00165 | 4 | 5 | 6 | 3 |

The first number in each row is the flow identifier, the second number is the service rate reserved for the flow (expressed as a fraction of the full capacity of the ingress link), and the numbers that follow are the local identifiers of the network links that compose the network path of the flow, starting from the first link after the link of the UHS and ending with the egress link of the network that takes the packets to the destination host of the flow (the source and destination hosts can also be network gateways).

The full set of unique network paths can be identified through a first scan of the flow table. As an alternative, the network paths can be defined and identified in a dedicated network path table, then their identifiers, instead of their respective sets of network links, can be included in the flow table rows. See below.

Flow table

| | | |
|---|---|---|
| 241 | 0.00165 | P35 |
| 242 | 0.00165 | P47 |

Path table

| | | | | |
|---|---|---|---|---|
| P35 | 1 | 2 | 3 | |
| P47 | 4 | 5 | 6 | 3 |

Once the unique network paths are identified, they can be associated with shaping nodes in the second layer of the hierarchy. A second scan of the flow table can then be used to compute the cumulative shaping rates of the shaping nodes associated with the network paths, and the cumulative shaping rates of the individual network links.

Upon completion of the second scan of the flow table (or first scan, if a separate network-path table is provided), the shaping hierarchy is fully configured, with the shaping rates of the shaping nodes of the network paths, the shaping rates of the network links used in the H-WF2Q augmentation, the shaping rate of the virtual empty queue, and of course the shaping rates of the individual queues.

Thanks to the shaping rate of the virtual empty queue, the total allocated rate in the top node of the hierarchy is equal to the full capacity of the ingress link.

In a canonical instance of the H-WF2Q algorithm, the selection of the next queue to be served is done as follows.

The algorithm starts with the top node in the hierarchy. Every time the top node looks for a new child node to serve, it looks among its child scheduling nodes for the node with the minimum finishing potential that satisfies the eligibility condition, i.e.:

$$F_{E,min}^k = \min_i\{F_i : S_i \le V(t)\},$$

where $F_i$ is the finishing potential of child node $i$, $S_i$ is the starting potential of child node $i$, and $V(t)$ is the virtual time (or system potential) of the top scheduling node.

If node $J$ is selected by the top node, node $J$ repeats the same search, and the search for the child node with minimum eligible finishing potential proceeds the same way until the selected child node corresponds to a flow queue.

The k-th time a node $J$ receives a service, its starting and finishing potentials are updated as follows:

$$S_J^{k+1} = F_J^k$$

$$F_J^{k+1} = S_J^{k+1} + L/r_i$$

where $L$ is the size of every packet that is virtually handled by the scheduler. It should be noted that this description of the canonical H-WF2Q is based on the same UHS assumption that all packets handled by the DaaS shaper have identical size $L$, which holds for the offline computation of the PSS; in the general case where packets have different sizes, which applies in run-time executions of the scheduling algorithm, the size of the packet should be the size of the head-of-line packet in the queue that should be served within the hierarchy branch of node $J$.

When node $J$ receives the service, its system potential, which is needed for defining the eligibility of its child nodes, must also be updated. The original specification of H-WF2Q (see J.C.R. Bennett, H. Zhang, "Hierarchical Packet Fair Queuing Algorithms," IEEE/ACM Transactions on Networking, Vol. 5, No. 5, October 1997, which is hereby incorporated by reference for all purposes as if fully set forth herein) recommends using the system potential definition given in D. Stiliadis, A. Varma, "A General Methodology for Designing Efficient Traffic Scheduling and Shaping Algorithms," Proceedings of IEEE INFOCOM '97, April 1997 (which is hereby incorporated by reference for all purposes as if fully set forth herein), where the system potential is always at least equal to the minimum starting potential of all the child nodes. However, using the definition of system potential from F. M. Chiussi, A. Francini, "Minimum-delay self-clocked fair queueing algorithm for packet-switched networks," Proceedings of IEEE INFOCOM '98, April 1998 (which is hereby incorporated by reference for all purposes as if fully set forth herein) is more practical, because it includes the average of the starting potentials of all child nodes, which may be maintained with single-step updates (as opposed to searching every time for the minimum starting potential) and by definition is guaranteed to be always larger than at least one of the starting potentials of the child nodes (i.e., a child node eligible for service is always guaranteed to be found).

Besides working with hierarchies that always include only two scheduling layers, UHS augments the canonical operation of H-WF2Q with the verification of the eligibility condition for the physical links of the network paths corresponding to the shaping nodes of the lower shaping layer. According to the UHS augmentation, a lower-layer shaping node is eligible for service if its starting potential is not larger than the system potential of the top node and each of its links is also eligible for service. The next network path selected for service is then the one with the minimum finishing potential out of the network paths whose shaping nodes are eligible for service.

The same way as in the canonical version of H-WF2Q, the starting and finishing potentials of the shaping nodes of the network paths are updated upon execution of a service (in the offline computation of the PSS, the execution of a service produces the placement in the current PSS timeslot of a queue served by that shaping node). The same rules of the canonical H-WF2Q also apply to the update of the system potential of the top node and of the nodes of the network path that receives the service, and finally to the update of the starting and finishing potentials for the flow queue that receives the same service.

The UHS augmentation of H-WF2Q also requires maintenance of the starting and finishing potentials for the physical links of the network paths. The rule for the update is the usual one, and it is applied to every link of the network path that receives the service when the service execution is completed. The reference system potential that is used for evaluation of the eligibility condition is the system potential of the top shaping node. Since the top shaping node is always fully loaded (due to the presence of the virtual empty queue), application of the system potential of "Minimum-delay self-clocked fair queueing algorithm for packet-switched networks" to the top shaping node produces advancements of the system potential that reflect the simulated real time. In practice, if all service rates are quantified as fractions of the ingress link capacity, and all packet sizes are expressed as a single unit, then the system potential of the top shaping node advances by one unit at every timeslot because the top shaping node always operates at the full capacity of the ingress link (under the same convention of fractional definition of the service rates, the full capacity of the ingress link is equal to 1).

To ensure that the top node never misses a service assignment (whether to a real queue or to the virtual empty queue), the search for the next network path to be served also includes a search for the eligible network path with eligible starting potential, but whose set of links includes at least a link that is currently not eligible for service. If the primary search does not return a network path that is fully eligible for service, the result of this second, parallel search is used as a replacement.

Finally, all system potentials are initialized to 0, all starting potentials are initialized to 0, and all finishing potentials are initialized with the usual rule of the canonical H-WF2Q:

$$S_J^1 = V_J(0) = 0$$

$$F_J^1 = L/r_J$$

The following pseudo-code summarizes the operation of the H-WF2Q scheduler with UHS augmentation as carried out by a scheduling controller (centralized or local) for computation of the PSS. The pseudo-code assumes that every scheduling node maintains a list of its child nodes that are sorted by increasing value of their finishing potentials.

```
/*
** Variables
*/

Node *auxnode;              // Auxiliary variable for searching through the
                           // scheduling nodes
Node *frstchoice = NULL;    // Child node found in primary search
Node *scndchoice = NULL;    // Child node found in secondary search
int ii;                    // Auxiliary variable for searching through the links


/*
** Code
*/

auxnode = sched->dl_head;       // Start searching for the network path
while((auxnode != NULL) && (frstchoice == NULL)) // loop while auxnode is non-NULL
                                                 // and frstchoice is NULL.
    {
    if(auxnode->SP <= sched->potential)
        {                        // The node of the network path is eligible for
```

```
                                    // service: it works as a second choice

          if(scndchoice == NULL)

            {

              scndchoice = auxnode;

            }

          if (auxnode->no_phy_nodes == 0)  // The path has no links

            {

              frstchoice = auxnode;

            }

          else

            {

              // The network path has links: scan the links for eligibility

              for (ii = 0; ii < auxnode->no_phy_nodes; ii++)

                {

                  if (Phy_vect[auxnode->phy_node_id[ii]].SP > out_port.potential)

                    {

                      break;        // One non-eligible link was found

                    }

                }

              if (ii == auxnode->no_phy_nodes)

                {

                  // The 'for' cycle did not break:

                  // all links in the path are eligible for service and the

                  // network path can be selected for service

                  frstchoice = auxnode;

                }

            }

        }
```

```
        // Keep looking.

        auxnode = auxnode->next;

    }

    if (frstchoice != NULL)

    {

        // Return first choice node if found

        return (frstchoice);

    }

    // Return second choice if no first

    return (scndchoice);
```

The above pseudo-code begins by initializing a first-choice variable frstchoice and a second-choice variable scndchoice to NULL. The second-choice variable scndchoice is used in the case where the node of the network path is eligible for service but not every link of the path is eligible for service. It provides a backup in the rare case when every path has at least a link that is not eligible for service.

The working variable auxnode is initialized to the head of the list of scheduling child nodes of the current scheduling node sched. In the list, the child nodes are always sorted from the lowest to the highest finishing potential. Next, a while loop searches over the child nodes of the scheduling node sched. As long as the working variable auxnode is not NULL and the variable frstchoice is NULL the loop will continue to search for a child node. The first time through the while loop these conditions are always met, so the while loop always starts to execute. The next step is to determine if the current child node indicated by the variable auxnode is eligible for service. If so, then if the variable scndchoice has not been previously set to a value it is set to the current value of auxnode. This ensures that the first eligible node with the lowest finishing potential becomes scndchoice.

Next the pseudo-code determines if the child node has links. If not, as is the case for the virtual idle queue when the scheduling node is the top node of the hierarchy and for all flow queues when the scheduling node is a bottom-layer node associated with a network path, then the variable frstchoice is set to the auxnode value, because it is eligible. Otherwise, if the child node is associated with a network path that contains at least one link, a for loop begins that searches through the nodes to determine if all of the links of the network path are eligible. If one non-eligible link is found, then the loop breaks. Otherwise, if all of the links are eligible, the for loop completes and the final value of the counter variable ii is equal to the number of nodes no_phy_nodes.

After the for loop completes, if the counter variable ii is equal to the number of nodes no_phy_nodes, then all of the links are eligible and the variable frstchoice is set to the value of auxnode. The value of auxnode is updated to the next node. At this point, the while loop determines if a next iteration is to be performed by determining that auxnode does not equal NULL and frstchoice equals NULL. When a value of frstchoice is found, then the while loop ends. Otherwise it continues searching for a network path that has links that are all eligible.

When the while loop ends, if frstchoice is not NULL, i.e., a value was set because the scheduling node is the top node of the hierarchy and an eligible path was found that has all links also eligible, or the scheduling node is in the bottom layer of the hierarchy and an eligible queue was found for a flow that uses the network path of the node, then the value frstchoice is returned. Otherwise the algorithm returns the value scndchoice.

When the node returned by the algorithm is serviced, then the starting and finishing potentials are updated as described above.

When the child node returned by the algorithm is associated with a network path, the sched variable is set equal to the scheduling node of the network path and the same algorithm of the pseudo-code is used to search for the flow queue to be served within the set of flows that use the same network path.

When the child node returned by the algorithm is associated with a flow queue, the identifier of the flow queue is placed in the current timeslot of the PSS and the scheduler moves on to the flow queue selection for the next timeslot.

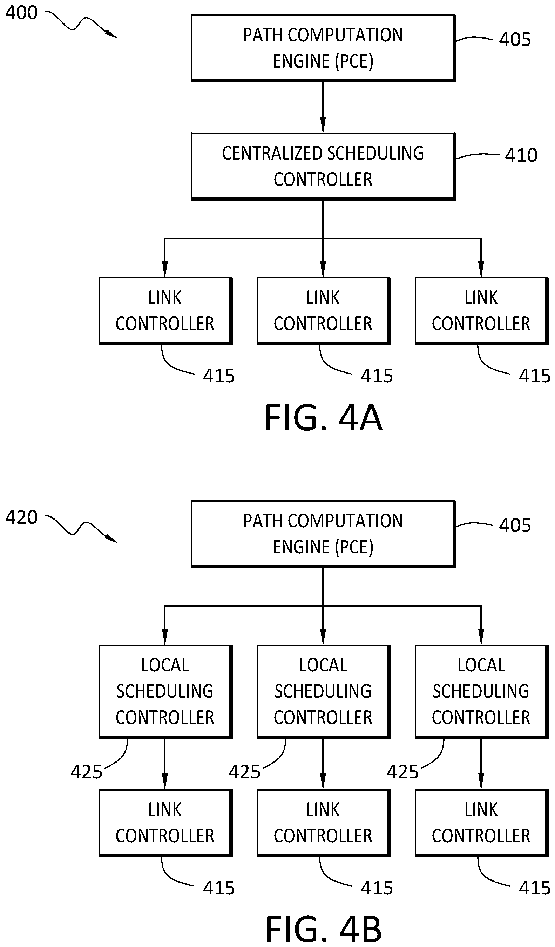

FIG. 4A illustrates a first embodiment of a UHS system 400. The UHS system 400 includes a PCE 405, a centralized scheduling controller 410, and a plurality of link controllers 415. The PCE 405 is a centralized device that routes flows and passes per-ingress-link flow-table instances to the centralized scheduling controller 410. The centralized scheduling controller 410 generates hierarchies for all ingress links, computes respective PSS instances, and passes them to the respective link controllers. The PSS instances may be computed offline using the algorithm described in the pseudocode above. The link controllers 415 schedule packet transmissions using the respective PSS instances. This may be done by reading the PSS to choose the queues from which to transmit the packets. A method for reading the PSS is disclosed in the '845 application.

FIG. 4B illustrates a second embodiment of a UHS system 420. The UHS system 420 includes a PCE 405, a plurality of local scheduling controllers 425, and a plurality of link controllers 415. The PCE 405 is a centralized device that routes flows and passes per-ingress-link flow-table instances to the local scheduling controllers 425. The local scheduling controllers 425 generate hierarchies for their respective ingress links, compute respective PSS instances, and pass them to the respective link controllers. The PSS instances may be computed offline using the algorithm described in the pseudo-code above. The link controllers 415 schedule packet transmissions using the respective PSS instances. This may be done by reading the PSS to choose the queues from which to transmit the packets. A method for reading the PSS is disclosed in the '845 application.

While the UHS is described as calculating the PSS offline, it may also do it in real time. For example, the centralized controller 410 or the local scheduling controllers 425 may first generate hierarchies for the ingress links, and then the link controllers 415 may execute the algorithm described in the pseudo-code above in real time. In the real-time execution of the algorithm of the pseudo-code above, the link controllers may still assume that all flow queues are always loaded with packets, independently of their actual states. Then, if the algorithm selects for service a queue that is empty, the link controller immediately proceeds with the next execution of the scheduling algorithm of the pseudo-code, where more network paths and links may have become eligible since the previous execution because of the advance of the system potential of the top node of the hierarchy, and more queues may have become busy because of the arrival of new packets.

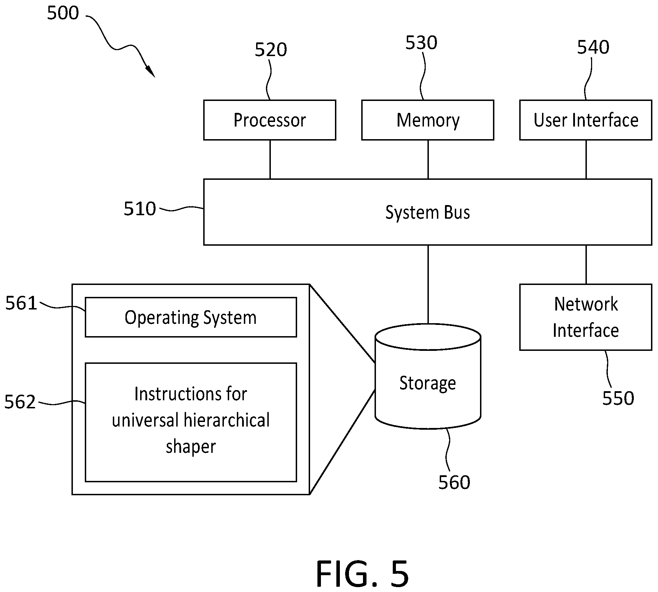

FIG. 5 illustrates an exemplary hardware diagram 500 for implementing a universal hierarchical shaper. The exemplary hardware 500 may be the PCE 405, centralized scheduling controller 410, local scheduling controller 425, or link controller 415 described above. As shown, the device 500 includes a processor 520, memory 530, user interface 540, network interface 550, and storage 560 interconnected via one or more system buses 510. It will be understood that FIG. 5 constitutes, in some respects, an abstraction and that the actual organization of the components of the device 500 may be more complex than illustrated.

The processor 520 may be any hardware device capable of executing instructions stored in memory 530 or storage 560 or otherwise processing data. As such, the processor may include a microprocessor, microcontroller, graphics processing unit (GPU), neural network processor, field programmable gate array (FPGA), application-specific integrated circuit (ASIC), or other similar devices.

The memory 530 may include various memories such as, for example L1, L2, or L3 cache or system memory. As such, the memory 530 may include static random-access memory (SRAM), dynamic RAM (DRAM), flash memory, read only memory (ROM), or other similar memory devices.

The user interface 540 may include one or more devices for enabling communication with a user. For example, the user interface 540 may include a display, a touch interface, a mouse, and/or a keyboard for receiving user commands. In some embodiments, the user interface 540 may include a command line interface or graphical user interface that may be presented to a remote terminal via the network interface 550.

The network interface 550 may include one or more devices for enabling communication with other hardware devices. For example, the network interface 550 may include a network interface card (NIC) configured to communicate according to the Ethernet protocol or other communications protocols, including wireless protocols. Additionally, the network interface 550 may implement a TCP/IP stack for communication according to the TCP/IP protocols. Various alternative or additional hardware or configurations for the network interface 550 will be apparent.

The storage 560 may include one or more machine-readable storage media such as read-only memory (ROM), random-access memory (RAM), magnetic disk storage media, optical storage media, flash-memory devices, or similar storage media. In various embodiments, the storage 560 may store instructions for execution by the processor 520 or data upon with the processor 520 may operate. For example, the storage 560 may store a base operating system 561 for controlling various basic operations of the hardware 500. Storage 562 may include instructions for universal hierarchical shaper.

It will be apparent that various information described as stored in the storage 560 may be additionally or alternatively stored in the memory 530. In this respect, the memory 530 may also be considered to constitute a "storage device" and the storage 560 may be considered a "memory." Various other arrangements will be apparent. Further, the memory 530 and storage 560 may both be considered to be "non-transitory machine-readable media." As used herein, the term "non-transitory" will be understood to exclude transitory signals but to include all forms of storage, including both volatile and non-volatile memories.

The system bus 510 allows communication between the processor 520, memory 530, user interface 540, storage 560, and network interface 550.

While the host device 500 is shown as including one of each described component, the various components may be duplicated in various embodiments. For example, the processor 520 may include multiple microprocessors that are configured to independently execute the methods described herein or are configured to perform steps or subroutines of the methods described herein such that the multiple processors cooperate to achieve the functionality described herein. Further, where the device 500 is implemented in a cloud computing system, the various hardware components may belong to separate physical systems. For example, the processor 520 may include a first processor in a first server and a second processor in a second server.

The foregoing disclosure provides illustration and description but is not intended to be exhaustive or to limit the aspects to the precise form disclosed. Modifications and variations may be made in light of the above disclosure or may be acquired from practice of the aspects.

As used herein, the term "component" is intended to be broadly construed as hardware, firmware, and/or a combination of hardware and software. As used herein, a processor is implemented in hardware, firmware, and/or a combination of hardware and software.

As used herein, satisfying a threshold may, depending on the context, refer to a value being greater than the threshold, greater than or equal to the threshold, less than the threshold, less than or equal to the threshold, equal to the threshold, not equal to the threshold, and/or the like. It will be apparent that systems and/or methods described herein may be implemented in different forms of hardware, firmware, and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, the term "non-transitory machine-readable storage medium" will be understood to exclude a transitory propagation signal but to include all forms of volatile and non-volatile memory. When software is implemented on a processor, the combination of software and processor becomes a specific dedicated machine.

Because the data processing implementing the embodiments described herein is, for the most part, composed of electronic components and circuits known to those skilled in the art, circuit details will not be explained in any greater extent than that considered necessary as illustrated above, for the understanding and appreciation of the underlying concepts of the aspects described herein and in order not to obfuscate or distract from the teachings of the aspects described herein.

Unless stated otherwise, terms such as "first" and "second" are used to arbitrarily distinguish between the elements such terms describe. Thus, these terms are not necessarily intended to indicate temporal or other prioritization of such elements.

It should be appreciated by those skilled in the art that any block diagrams herein represent conceptual views of illustrative hardware embodying the principles of the aspects.

While each of the embodiments are described above in terms of their structural arrangements, it should be appreciated that the aspects also cover the associated methods of using the embodiments described above.

Unless otherwise indicated, all numbers expressing parameter values and so forth used in the specification and claims are to be understood as being modified in all instances by the term "about." Accordingly, unless indicated to the contrary, the numerical parameters set forth in this specification and attached claims are approximations that may vary depending upon the desired properties sought to be obtained by embodiments of the present disclosure. As used herein, "about" may be understood by persons of ordinary skill in the art and can vary to some extent depending upon the context in which it is used. If there are uses of the term which are not clear to persons of ordinary skill in the art, given the context in which it is used, "about" may mean up to plus or minus 10% of the particular term.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Furthermore, as used herein, the terms "set" and "group" are intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," and/or the like are intended to be open-ended terms. Further, the phrase "based on" is intended to mean "based, at least in part, on" unless explicitly stated otherwise.

**Claims**

1. A scheduling controller configured to control a network having ingress nodes, interior nodes, and egress nodes, comprising:

    a network interface configured to communicate with the network;
    a memory; and
    a processor coupled to the memory and the network interface, wherein the processor is further configured to:

    define a traffic shaping hierarchy with a first level having a first traffic shaper associated with an ingress link between an ingress node and an interior node and a second level with a plurality of second traffic shapers associated with each path of a plurality of paths between the ingress link and the egress nodes;
    determine, each time a service assignment is due, which of the plurality of paths associated with the ingress link to service, based upon which of the plurality of paths has a lowest eligible finishing potential and wherein each link in the path has an eligible finishing potential; and
    determine, for the determined path, which of a plurality of packet queues associated with the network flows that are routed through the path to service, based upon which of the plurality of packet queues has a lowest eligible finishing potential.

2. The scheduling controller of claim 1, wherein servicing a packet queue is based upon a predetermined time schedule, wherein the predetermined time schedule is calculated offline.

3. The scheduling controller of claim 1, wherein the processor is further configured to:
    update a starting potential and finishing potential for the serviced path, links of the serviced path, and serviced queue.

4. The scheduling controller of claim 1, wherein the processor is further configured to:
    determine which of the plurality of paths associated with the ingress link to service based upon which of the plurality of paths have a lowest finishing potential when none of the paths have all of their links eligible.

5. The scheduling controller of claim 1, wherein defining a traffic shaping hierarchy includes identifying all unique paths by scanning a flow table.

6. The scheduling controller of claim 5, wherein the processor is further configured to:
    compute cumulative shaping rates of:

    the first traffic shaper;
    the second traffic shapers associated with the unique paths; and
    individual links in the network.

7. The scheduling controller of claim 1, wherein defining a traffic shaping hierarchy includes creating a virtual empty queue associated with the ingress link.

8. A method to control a network having ingress nodes, interior nodes, and egress nodes, comprising:

    defining a traffic shaping hierarchy with a first level having a first traffic shaper associated with an ingress link between an ingress node and an interior node and a second level with a plurality of second traffic shapers associated with each path of a plurality of paths between the ingress link and the egress nodes;
    determining, each time a service assignment is due, which of the plurality of paths associated with the ingress link to service, based upon which of the plurality of paths has a lowest eligible finishing potential and wherein each link in the path has an eligible finishing potential; and
    determining, for the determined path, which of a plurality of packet queues associated with the network flows that are routed through the path to service, based upon which of the plurality of packet queues has a lowest eligible finishing potential.

9. The method of claim 8, wherein servicing a packet queue is based upon a predetermined time schedule, wherein the predetermined time schedule is calculated offine.

10. The method of claim 8, further comprising:

updating a starting potential and finishing potential for the serviced path, links of the serviced path, and the serviced queue.

11. The method of claim 8, further comprising:
determining which of the plurality of paths associated with the ingress link to service based upon which of the plurality of paths have the lowest finishing potential when none of the paths have all of their links eligible.

12. The method of claim 8, wherein defining a traffic shaping hierarchy includes identifying all unique paths by scanning a flow table.

13. The method of claim 12, further comprising:
computing cumulative shaping rates of:

the first traffic shaper;
the second traffic shapers associated with the unique paths; and
individual links in the network.

14. The method of claim 8, wherein defining a traffic shaping hierarchy includes creating a virtual empty queue associated with the ingress link.

FIG. 1

FIG. 2

FIG. 3

EP 4 531 371 A1

400

PATH COMPUTATION
ENGINE (PCE) — 405

CENTRALIZED SCHEDULING
CONTROLLER — 410

LINK
CONTROLLER — 415

LINK
CONTROLLER — 415

LINK
CONTROLLER — 415

## FIG. 4A

420

PATH COMPUTATION
ENGINE (PCE) — 405

LOCAL
SCHEDULING
CONTROLLER
425

LOCAL
SCHEDULING
CONTROLLER
425

LOCAL
SCHEDULING
CONTROLLER
425

LINK
CONTROLLER — 415

LINK
CONTROLLER — 415

LINK
CONTROLLER — 415

## FIG. 4B

500

520          530          540

| Processor | Memory | User Interface |

510 — System Bus

561 — | Operating System |

562 — | Instructions for universal hierarchical shaper |

Storage

560

Network Interface

550

## FIG. 5

Europäisches
Patentamt

European
Patent Office

Office européen
des brevets

# EUROPEAN SEARCH REPORT

**Application Number**

EP 24 20 1000

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 618 391 B1 (CHIUSSI FABIO MASSIMO [US] ET AL) 9 September 2003 (2003-09-09) * columns 5-7; claims 1-32; figure 2 * ----- | 1-14 | INV. H04L47/22 H04L47/50 |
| A | CHANGHEE JOO ET AL: "Weighted fair bandwidth allocation and active queue management for adaptive flows", COMMUNICATIONS SYSTEMS, 2004. ICCS 2004. THE NINTH INTERNATIONAL CONFE RENCE ON SINGAPORE, CHINA 6-8 SEPT. 2004, PISCATAWAY, NJ, USA,IEEE, 6 September 2004 (2004-09-06), pages 35-39, XP010743278, DOI: 10.1109/ICCS.2004.1359334 ISBN: 978-0-7803-8549-8 * the whole document * ----- | 1-14 | |
| | | | **TECHNICAL FIELDS SEARCHED (IPC)** H04L |

The present search report has been drawn up for all claims

| Place of search | Date of completion of the search | Examiner |
|---|---|---|
| The Hague | 27 January 2025 | Boureanu, Vlad |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................

& : member of the same patent family, corresponding
    document

EPO FORM 1503 03.82 (P04C01)

2

**ANNEX TO THE EUROPEAN SEARCH REPORT
ON EUROPEAN PATENT APPLICATION NO.**

EP 24 20 1000

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2025

| Patent document cited in search report | Publication date | Patent family member(s) | Publication date |
|---|---|---|---|
| US 6618391 B1 | 09-09-2003 | NONE | |

For more details about this annex : see Official Journal of the European Patent Office, No. 12/82

**EP 4 531 371 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 66927822
- US 86272322
- US 13584520

**Non-patent literature cited in the description**

- **J.C.R. BENNETT** ; **H. ZHANG**. Hierarchical Packet Fair Queuing Algorithms. *IEEE/ACM Transactions on Networking*, October 1997, vol. 5 (5)
- **D. STILIADIS** ; **A. VARMA**. A General Methodology for Designing Efficient Traffic Scheduling and Shaping Algorithms. *Proceedings of IEEE INFOCOM '97*, April 1997
- **F. M. CHIUSSI** ; **A. FRANCINI**. Minimum-delay self-clocked fair queueing algorithm for packet-switched networks. *Proceedings of IEEE INFOCOM '98*, April 1998